# EUROPEAN PATENT SPECIFICATION

(11) **EP 3 435 476 B1**
(45) Date of publication and mention of the grant of the patent: **25.01.2023**
(21) Application number: 17183042.5
(22) Date of filing: 25.07.2017
(51) Int. Cl.: H01M 10/6553, H01M 10/6595, H01M 10/6556, H01M 10/6568, H01M 10/6557, H01M 10/6552, H01M 10/667, H01M 10/6554, H01M 10/66, H01M 10/659, H01M 10/42

(54) **BATTERY WITH A FLEXIBLE THIN FILM AND A COOLING DEVICE, THIN FILM AND METHOD OF MANUFACTURING A BATTERY**
BATTERIE MIT EINEM FLEXIBLEN DÜNNEN FILM UND EIN KÜHLVORRICHTUNG, DÜNNES FILM UND VERFAHREN ZUR HERSTELLUNG EINER BATTERIE
BATTERIE AVEC UN FIN FILM FLEXIBLE ET UN DISPOSITIF DE REFROIDISSEMENT, FILM FIN ET METHODE DE FABRICATION D'UNE BATTERIE

(43) Date of publication of application: 30.01.2019
(73) Proprietor: Airbus Defence and Space GmbH, 82024 Taufkirchen (DE); Airbus Operations GmbH, 21129 Hamburg (DE)
(72) Inventor: Friedberger, Alois, 85667 Oberpframmern (DE); Linde, Peter, 21614 Buxtehude (DE)
(74) Representative: KASTEL Patentanwälte PartG mbB

(56) References cited:
- EP-A1- 1 174 939
- WO-A1-2010/016771
- DE-A1-102012 023 842
- US-A1- 2004 241 540
- US-A1- 2015 064 511
- US-A1- 2016 164 064

## Description

The invention relates to batteries and in particular to compact batteries with temperature control elements. More particularly it relates to batteries adapted to be embarked on vehicles such as aircrafts for example.

The temperature of a battery is a crucial factor of performance, longevity and safety of a battery. A battery embarked on an aircraft may in particular be exposed to many different situations such as fast charging and fast discharging phases as well as with very different temperature environments due to changing altitudes or climates. The control of the temperature of a battery is essential for the safety of the battery and of the vehicle in which it may be embarked.

The volume of a battery is an important limitation of its use in many applications. The current limitations in the energy density of the batteries induce that the volume dedicated to batteries in many applications such as mobile electronic devices or electrical vehicles remains important in regards to the total volume available for systems. In particular in vehicles such as aircrafts the volume available for the batteries is very small. Therefore, compact batteries means more space available for other functional systems, for payload volume or for embarking more batteries. Together with energy density, the compactness of batteries is therefore an essential factor in the design and industrial feasibility of electrically powered vehicles.

US 9,184,469 discloses a battery for miniaturized medical devices comprising solid state battery elements each with anodic and cathodic connectors on the same face of the battery elements, said elements being mounted in pairs back to back on opposite sides of a carrier foil. Said carrier foil comprises support sections and conductive tracks on both sides. The battery elements may be connected in series or in parallel, although the document is silent on the construction of the battery to obtain an electrical connection in parallel of the battery elements.

This battery does not comprise any temperature control. In larger batteries, this could be a performance, longevity and safety issue as high variations of temperatures or long functioning under inappropriate temperatures may impede the performance, the longevity and the safety of the battery.

Moreover, such construction of a battery is not optimized in terms of compactness. In particular such construction is not very well adapted to batteries of larger dimensions.

US 2004/0241540 A1 describes a battery cell in which the current collector is provided with a cooling structure.

US 2015/0064511 A1 describes a battery with heat transfer elements.

EP 1 174 939 A1 discloses a battery with heat transmitters.

US 2016/0164064 discloses a battery having improved heat sink characteristics.

WO 2010/016771 A1 discloses a system for cooling or heating a battery module.

DE 10 2012 023842 A1 discloses a battery with a cooling cell having two substances which cause an endothermic reaction when they are mixed.

The invention aims to provide a compact battery. The invention aims to provide a long- life and performing battery. The invention aims at providing a safe battery, in particular a battery that would meet the aeronautics safety requirements. The invention also aims at providing a multifunctional battery. The invention also aims at allowing the user to tailor the output of a battery not only at conception or manufacturing, but also during use of the battery. The invention furthermore aims at providing a battery that would be easy to manufacture and to assemble, even with a high number of single elements and functions achieved. The scope of the invention is defined by appended claims.

The invention proposes an electrical battery comprising:
a plurality of battery cells, each comprising an anode and a cathode,
wherein a thin film comprising at least one temperature control device is arranged between the battery cells,
wherein the thin film
   - comprises a plurality of anode contacts adapted to electrically contact the anodes of the battery cells,
   - comprises a plurality of cathode contacts adapted to electrically contact the cathodes of the battery cells,
   - is adapted to ensure an electrical contact simultaneously
      o between the anode contacts and the anodes, and
      o between the cathode contacts and the cathodes,
and wherein the temperature control device comprises at least one Peltier element integrated in the thin film, wherein the thin film comprises at least one electrical circuit to address the one or more Peltier elements.

In the whole text, the term 'electrode' is used as a standard denomination for anode or cathode, therefore applying to the anode and/or the cathode.

The temperature control device is adapted to at least locally modify a temperature of the thin film. The temperature control device may be adapted to at least partially cool down the thin film and/or at least partially warm up the thin film. Thereby the temperature of the battery in general and of a battery cell in particular may be controlled by heating up or cooling down the thin film. The temperature of a battery according to the invention may thus be controlled at any moment and the battery may be maintained at an optimal temperature.

The temperature control device may be adapted to simultaneously cool down a portion of the thin film and warm up another portion of the thin film. Thereby the temperature of the battery may be controlled locally so that a battery cell may be cooled down while another battery cell may be warmed up.

A battery cell which is under use (charge or discharge) may be subject to an increasing temperature, thereby reducing its efficiency and also putting the battery cell at risk. Similarly when a battery cell's environment is at a low temperature, the efficiency of the battery cell may also decrease. By providing a temperature control device integrated into the thin film, the invention allows maintaining optimal temperature of each battery cell of a battery.

A battery according to the invention is thus particularly efficient and safe.

Moreover, the integration of a temperature control device on a thin film provides a particularly compact battery.

The temperature control device may comprise a cooling device.

A cooling device according to the invention is adapted to absorb and/or transport heat away. A cooling device according to the invention may be of many different types, some of which will be described in the following description.

The temperature control device may comprise an active cooling device.

An active cooling device can be activated and in some embodiments also deactivated. An active cooling device requires a source of energy, for example electric energy, chemical energy, hydraulic energy (fluid circulation), etc.

Similarly the temperature control device may comprise an active heating device.

An active cooling and/or heating device may be fed by electricity from at least one battery cell of the battery itself.

The temperature control device may at least in part be controlled by a control unit adapted to activate the temperature control device upon the meeting of at least one criterion. A cooling and/or heating device of the temperature control device may be activated depending on measurement results of parameters relating to the battery. In particular, the activation of the temperature control device may be triggered based on the results of measurement made by sensors in the battery such as for example sensors integrated on the thin film.

Different triggering criteria may, together or individually, be required to activate the temperature control device, such as for example: detection of fire, detection of high temperature, detection of gas, detection of liquid(s), detection of electromagnetic radiation (eg. infrared or visible), etc. The temperature control device improves the safety of the battery.

The temperature control device comprises at least one Peltier element.

A Peltier element according to the invention is an element adapted to absorb and/or provide heat based on the Peltier effect. In particular a Peltier element comprises a n-junction and a p-junction which are able to absorb heat at a cooling side and release heat at a heating side under a circulation of electricity in the junctions, the heating side and the cooling side depending on the direction of circulation of the electronic current.

The temperature control device may in particular comprise a Peltier cooling element. Therefore an active cooling element may be a Peltier element.

The Peltier element may for example comprise Bi-Sb-Te (Bismuth Telluride based alloys) and/ or a p-type junction comprising Zn-Sb and/or a n-type junction comprising ZnO:Al.

The thin film may in particular comprise a thin Peltier element. The Peltier element may have a thickness of less than 500 µm (micrometer), more particularly of less than 200 µm, for example of 20 µm or 1 µm .

Moreover, the Peltier element may have a surface of less than 50 mm², more particularly of less than 20 mm², for example of about 10 mm².

The Peltier element may be arranged to have at least one face at the surface of the thin film or it may be arranged in an intermediate layer (between two layers) of the thin film.

The heating side of the Peltier element may be in contact with a heat conductive circuit. The heat conductive circuit may for example be a metallic layer of the thin film. The heat conductive circuit allows transporting heat from the heating side of one or more Peltier elements to a heat sink.

In some embodiments, the Peltier element may ba at least partially covered with a layer of an electrically insulating coating.

The temperature control device may comprise a plurality of cooling and/or heating devices. In particular the temperature control device may comprise a plurality of Peltier elements.

A plurality of thin Peltier elements may be at least partially overlaid. In particular a thin film may comprise at least two Peltier elements which at least partially overlap each other. Thereby a better heat extraction may be obtained.

Moreover the heating side and the cooling side of the Peltier element may be placed at different locations of the battery, and in particular at different locations of the thin film.

The temperature control device may comprise a plurality of cooling and/or heating devices, and at least two cooling and/or heating devices may be controlled independently from each other.

In particular a plurality of cooling and/or heating devices of the temperature control device may be addressed individually. This may be achieved by individual controllers and/or individual electrical wiring for the cooling and/or heating devices. The individual controllers and/or electrical wiring may beneficially be integrated electronics of the thin film. More specifically the temperature control device may comprise a plurality of Peltier elements, addressed in groups or individually. The use of a thin film with integrated electronics and in particular with printed electrical circuits is particularly beneficial to manufacture such thin film with addressable Peltier elements in a fast and cost-effective way.

The temperature of the thin film and more generally of the battery may thus be controlled locally. This is in particular beneficial when only some of the battery cells of a battery are used: the temperature of the battery cells that are in use may be controlled independently from the temperature of the others battery cells that are not in use. The performance, longevity and safety of the battery may thus be optimized at any moment.

Depending on the application of the battery one type of cooling/heating device may be preferred to another. Also, two or more types of cooling/heating devices may be arranged in a same battery. In particular, they may be chosen based on their heat extraction efficiency.

The temperature control device may comprise at least one material that can undergo an endothermic reaction.

The temperature control device may in particular comprise a plurality of substances adapted to react together in an endothermic reaction when brought together.

The endothermic reaction may be triggered by a heat generator such as for example a micro-heater developing a heat pulse. The micro-heater may be integrated on the thin film ; it may for example be printed on the thin film. The endothermic reaction may be triggered through a control unit comprising an electronic circuit. The endothermic reaction of one or more cooling devices may be activated depending on measurements made by sensors in the battery ; for example the endothermic reaction of a cooling devices may be activated upon the detection of a temperature higher than a predetermined threshold temperature by a sensor integrated on the thin film.

The temperature control device may comprise a reservoir comprising a cooling substance. The cooling substance may also be a substance having a fire control function, such as a fire extinguishing function. In some embodiments the temperature control device may comprise an encapsulated flame retardant or cooling substance in the thin film, such as described in "Electrospun core-shell microfiber separator with thermal-triggered flame-retardant properties for lithium-ion batteries", by Kai Liu et al. in Science Advances, 13 Jan 2017, Vol. 3, no. 1, e1601978.

In alternative or in combination, the temperature control device may comprise at least a hydraulic circuit adapted to supply a fluid. The fluid may be a liquid or a gas. The fluid may for example be a cooling substance or a reactant for an endothermic reaction. The temperature control device may also comprise a valve adapted to regulate a flow of fluid. In particular the thin film may comprise an integrated micrometric valve. A control unit may be adapted to open the valve upon detection of a temperature above a given threshold.

The cooling substance and/or the substance(s) to provoke an endothermic reaction may be placed on the thin film during manufacturing. Alternatively or in combination they may be supplied to the battery from an external reservoir.

The thin film may comprise at least one heat-channel adapted to transport heat.

More particularly the temperature control device may comprise at least one heat-channel formed at least partially in the thin film.

The heat-channel may be adapted to transport heat to a heat sink.

The heat-channel may be a micrometric channel, that is a channel with a diameter of less than 1000 µm (micrometer), more particularly of less than 200 µm, for example of about 10 µm.

The heat-channel may be a fluid channel adapted to contain a fluid flow, such as for example a liquid flow (eg. a coolant or water flow), a gas flow (eg. an air flow), etc..

Moreover the battery may comprise a flow-circulating device adapted to make a fluid (liquid or gas) flow in one or more heat-channel(s). The battery may also comprise an hydraulic connector adapted to be connected to an external flow-circulating device not part of the battery. The flow-circulating device may comprise at least a pump and a heat exchanger.

The heat-channel may comprise a heat-conductive material such as a metal for example. More particularly the channel may for example be filled with a solid metal alloy. Alternatively or in addition, a heat pipe functionality can be used.

The heat-channel may extend over one or more layers of the thin film and may also traverse at least one layer.

The thin film may comprise a plurality of heat-channel, of one or more types.

The heat-channel(s) and the Peltier element(s) may be combined so that the heat-channel is adapted to transport heat away from the heating side of the Peltier element.

The thin film may comprise a mechanical stiffener in a bent section in order to limit the deformation of a heat-channel in this bent section.

The battery comprises at least two battery cells, and the temperature control device may be adapted to transport heat from a first battery cell to a second battery cell.

The temperature control device is thus adapted to simultaneously extract heat from at least a first battery cell and deliver at least part of this heat to at least a second battery cell. In particular, the thin film may comprise at least one first cooling and/or heating device in the proximity to a first battery cell and at least one second cooling and/or heating device in the proximity to a second battery cell.

The temperature control device comprises at least one Peltier element extending between two battery cells, with a heating side of the Peltier element in proximity to a first battery cell and a cooling side of the Peltier element. This has the advantage that by reversing the polarization of the Peltier element, heat may be transported in the inverse direction from the second battery cell to the first battery cell.

An overheating battery cell may be cooled down by the temperature control device. The heat of the over-heating battery cell may be transported to other battery cells. The temperature of each battery cell may be beneficially monitored such that if the temperature of a second battery cell to which the heat of a first over-heated battery cell is transported becomes too hot, the heat transfer to this second battery cell may be interrupted. The individual addressing of the temperature control device elements - for example the Peltier elements - in the proximity of each battery cell is beneficial.

The battery cell may comprise:
- a separator,
- an anode having an electrolytic face in contact with the separator and a collecting face opposite its electrolytic face,
- a cathode having an electrolytic face in contact with the separator and a collecting face opposite its electrolytic face,
- said separator being arranged between the anode and the cathode such that the collecting face of the anode and the collecting face of the cathode are arranged on opposite sides of the separator.

The thin film comprises
- plurality of anode contacts adapted to electrically contact the anodes
- a plurality of cathode contacts adapted to electrically contact the cathodes.

The thin film is
- at least partially flexible,
- bent between the anode contact and the cathode contact so as to ensure an electrical contact simultaneously:
   - between the anode contact and a collecting face of the anode, and
   - between the cathode contact and a collecting face of the cathode of a same battery cell.

The separator is adapted to and arranged between the anode and the cathode to permit the passage of electrically charged particles between the anode and the cathode while preventing the passing of electrons between the anode and the cathode. In most battery cells the separator comprises an electrolyte facilitating the exchange of charged particles such as ions between the anode and the cathode.

The separator has an anodic face and a cathodic face, said cathodic face being opposite the anodic face. The electrolytic face of the anode is in contact with the anodic face of the separator. The electrolytic face of the cathode is in contact with the cathodic face of the separator.

The anode and/or the cathode electrodes may be solid state electrodes. The electrodes are rigid, semi-rigid or flexible.

The battery cell may comprise fibers, in particular structural fibers such as carbon, glass or polymer fibers. Thereby the battery cell may have a high load resistance and in some instances may be used as a structural component ensuring a structural function such a mechanical reinforcement, for example in a structure of a vehicle.

More particularly, an electrode (anode or cathode) may comprise a composite material. An electrode may comprise a fiber reinforced polymer, for example comprising carbon fibers. The fibers may be coated by an electrode coating, such as a ferritic oxide coating for example on the carbon fibers of the cathode. The impregnating polymer may be any resin, such as thermoset, or thermoplastic resin. Such resin is treated with ionic liquid, such as Li-ionic liquid, before curing.

The separator may also comprise a composite material. More particularly a separator may comprise a fiber reinforced polymer for example comprising glass fibers.

Such battery cell presents the benefit of being adapted to be integrated into a load carrying structure. Thereby a battery according to the invention may be a structural battery which also has a structural function in the device, and in particular in the vehicle, in which it may be integrated.

An electrode (anode or cathode) may comprise one or more layers (or plies) of material. Each ply of an electrode may be of the same or of different materials.

The anode has a thickness between its electrolytic face and its collecting face smaller than at least one other dimension of the anode, and beneficially smaller than the width and the length of the anode.

The cathode has a thickness between its electrolytic face and its collecting face smaller than at least one other dimension of the cathode, and beneficially smaller than the width and the length of the cathode.

The thin film is adapted to contact electrically the anode and the cathode of a same battery cell, that is to say a cathode and an anode on opposite faces of a battery cell. The thin film provides the benefit of a compact electrical connection with a plurality of battery cells. In particular with very thin battery cells, such as for example laminated battery cells, a thin film according to the invention allows connecting a high number of battery cells electrically to one or more electrical circuit in a very compact manner.

The thin film has a thickness smaller than at least one other dimension of the thin film, in particular its thickness is smaller than its width and length. More particularly the thickness of the thin film is smaller than its width and length by a factor of at least 10. The thin film may have a thickness below 1 (ONE) mm, more beneficially below 0.2 mm, for example of about 0.01 mm. Therefore the thin film comprises a first face and a second face opposite to each other.

The thin film also provides the benefit of a simple and reliable manufacturing and/or assembly of a battery according to the invention. A high number of battery cells may be connected together and the battery may be equipped with integrated electronics such as sensors all in very few simple steps of manufacturing.

The thin film is beneficially made in an electrically isolating material. The thin film thus isolates the battery cells, in particular the anode and the cathode from each other. More particularly the thin film isolate the cathode of a first battery cell in contact with a portion of a first face of the thin film from the anode of a second battery cell in contact with a second opposite face of the thin film at least partially in the same said portion of the thin film.

The thin film may be a thin thermoplastic or thermoset foil.

Nonetheless, the thin film beneficially comprises at least one thermoplastic layer. This may allow to attach the thin film to a different element such as: an electrode, a body of the battery, a composite component (in particular a CFRP component), etc. Furthermore the thin film may ensure a bonding with each battery cell so as to assemble and keep together the battery cells of the battery. This may allow avoiding additional assembly elements in the battery and thereby providing a more compact and lighter battery.

For example the thin film may be of Polyethylenimine (PEI).

The thin film may be made in a fire-resistant material. The thin film may for example comprise a fire-resistant additive. Alternatively or in combination, the thin film may be coated by a fire-resistant material. Alternatively or in combination, the material of the thin film may also have a high-temperature melting point. Thereby the thin film may stop or at least slow the progress of a fire in the battery, and in any case not feed the fire.

The thin film comprises:
an anode connector and a cathode connector.

An anode connector (and/or cathode connector) is placed on the thin film and is an electrical connector adapted to provide an electrical connection with an external device such as a plug, a secondary electrical circuit, a wire, an electrical device, etc.

Moreover the thin film may comprise:
- at least a first electrical anodic circuit adapted to conduct electrical charges between the anode contact and an anode connector,
- at least a second electrical cathodic circuit adapted to conduct electrical charges from the cathode contact to an cathode connector.

The electrical anodic and/or cathodic circuits may be used to transport electrons both when discharging the battery, and when charging the battery.

The thin film beneficially comprises at least one electrical circuit in a bent section between the anode contact and the cathode contact.

The electrode contact (anode contact or cathode contact) of the thin film electrically contacts the electrode (anode or cathode). The electrode contact may be a direct electrical contact or an indirect electrical contact through an intermediate electrically conductive element, such as for example a layer of electrically conductive material such as an electrode collector for example.

The anode may comprise an anode collector in direct electrical contact with the material of the anode to collect electrical charges from the anode, a face of the anode collector forming the collecting face of the anode. Similarly, a battery according to the invention may comprise a cathode comprising a cathode collector in direct electrical contact with the material of the cathode to collect electrical charges from the cathode, a face of the cathode collector forming the collecting face of the cathode. In such embodiments, the anode contact (and/or cathode contact) of the thin film is beneficially in direct electrical contact with the anode collector (and/or cathode collector).

Alternatively or in combination,
- the anode contact is configured to form an anode collector of the anode, and/or
- the cathode contact is configured to form a cathode collector of the cathode.

Thereby, the electrode (anode or cathode) contact is in direct contact with the material of the electrode. The electrode collector is therefore directly integrated in the electrical circuit carried by the thin film. Such construction renders the battery particularly compact because the electrode collector on the battery cell and the electrical contact on the thin film are replaced by one electrode collector which also ensures the function of electrical contact between the electrode's material and the thin film's electrical circuit. Potentially two layers of material (one for the collector and one for the contact) are replaced by one layer of electrically conductive material ensuring both a collecting function and a contacting function.

The anode contact and the cathode contact may be printed on the thin film.

Different known printing manufacturing methods may be used to print the electrode contacts, that are described further after.

The anode contact and the cathode contact may be made of different materials.

For example the anode contact may be made of a first metal or metallic alloy, and the cathode contact may be made of a second metal or metallic alloy, different from the first metal or metallic alloy. Such embodiments are particularly beneficial when the electrode contacts also ensure the function of electrode collectors.

Moreover, whether or not the electrode contact ensures the function of collector, the electrode contact may be coated with graphene. The graphene may be deposited on the electrode contact. The addition of graphene on the surface of the electrode contact improves the electrical contact with the collecting face of the electrode (anode/cathode).

The anode contact and the cathode contact may have different shapes and/or a different effective surface, and/or a different placement on the thin film respectively to the cathode collecting surface and the anode collecting surface.

The effective surface is the surface of the electrode contact which is in electrical contact with the electrode. In particular when the electrode contact ensures the function of electrode collector, the effective surface is the surface in contact with the electrode's material.

The variation in shape and/or effective surface and/or placement on the thin film respectively to the multiple electrode collecting surfaces, may allow for flexibility in the arrangement of the battery cells in a battery according to the invention. Moreover it may for example allow leaving sufficient space on the thin film on the side of an electrode contact for one or more electrical circuits.

The thin film comprises:
- a plurality of anode contacts,
- a plurality of anode connectors,
- a first electrical anodic circuit adapted to conduct electrical charges between a first anode contact and a first anode connector,
- a second electrical anodic circuit adapted to conduct electrical charges between a second anode contact and a second anode connector,
- the second anodic circuit being integrally electrically isolated from the first anodic circuit.

The thin film comprises:
- a plurality of cathode contacts,
- a plurality of cathode connectors,
- a first electrical cathodic circuit adapted to conduct electrical charges between a first cathode contact and a first cathode connector,
- a second electrical cathodic circuit adapted to conduct electrical charges between a second cathode contact and a second cathode connector,
- the second cathodic circuit being integrally electrically isolated from the first cathodic circuit.

Independent anodic (or cathodic) circuits allow managing individually the battery cells of a battery. In particular one or more battery cell and/or one or more group(s) of battery cells may have its own independent anodic circuit and cathodic circuit leading respectively to an anodic connector and a cathodic connector isolated from others anodic and cathodic connectors. Thereby in a battery according to the invention, the current in each electrical circuit and the voltage between electrical circuits may be maintained at low values, while the battery may be delivering a high current or high voltage with many battery cells connected in parallel or in series outside the thin film. Therefore connecting independently a battery cell or a group of battery cell instead of connecting all the battery cells on a same electrical circuit allows using a thin film with thin electrical circuits such as for example electrical circuits printed on the thin film, thereby providing a compact battery.

Moreover, the connection in series or in parallel is not fixed in such battery but can be configured in function of the needs of the electrical devices fed by the battery. A switch unit may be connected to the anode connectors and cathode connectors, said switch unit being adapted to connect at least two anodic circuits or at least two cathodic circuits in series or in parallel. Having independent, isolated from each other, anodic circuits (respectively cathodic circuits= allows addressing individually the battery cells of a battery according to the invention for example by a switch unit as described above. Switches ensuring this function may also be directly integrated on the thin film.

A battery and more particularly the output of a battery according to the invention can therefore be managed and configured on demand and in a real-time manner.

Furthermore, in case of failure of a battery cell, an individual wiring of this battery cell allows to switch it off and electrically isolate it in a very simple manner. This is of particular importance for on-board batteries of vehicles, and more particularly for batteries of aircrafts. A battery cell may for example be isolated by a manual or automatic opening of a safety switch placed on an electrical circuit on which the defective battery cell is connected. More particularly a safety switch may be integrated on the thin film on the anodic and/or cathodic circuit of a battery cell. Such safety switch may for example be controlled based on the measurement of a sensor integrated on the thin film, such as for example a temperature sensor, a pressure sensor, a chemical sensor, a gas sensor, a liquid sensor, a voltage or current sensor, etc.

However in some embodiments of the invention, the anodic circuits (or cathodic circuits) of a group of or of all of the battery cells may be connected together on a common electrical circuit on the thin film. Thus a cumulated voltage or current (depending on the connection arrangement) may be obtained at the anode collector(s) (respectively cathode collector(s)).

The thin film may comprise at least a first electrode contact on a first face and a second electrode contact on a second face opposite the first face. The two electrode contact on the two faces of the thin film may moreover be placed on the same section of the thin film. The two electrode contact may be electrically isolated from each other by the material of the thin film. This permits the thin film to be placed between a plurality of battery cells while connecting every electrode of every battery cell arranged for example as a stack of battery cells.

The thin film may comprise a plurality of layers comprising at least a first layer comprising an electrically conductive portion and a second layer comprising an electrically conductive portion.

A conductive portion of the thin film may for example be an electrode contact, an anodic circuit, a cathodic circuit, an electronic component, etc..

One or more of the layers of the thin film may be a metallic layer so as to form a conductive layer for example forming part of an electrical anodic/cathodic circuit.

The thin film may comprise one or more electrically isolating layer(s). The thin film may comprise at least three layers with at least a conductive portion being placed on or in an intermediate layer so as to isolate said conductive portion from the outer surfaces of the thin film. In order to electrically isolate a conductive portion from the outer surfaces of the thin film, the conductive portion may also be placed on the inner face of a layer of a thin film comprising only two layers.

An electrical (anodic and/or cathodic) circuit may be placed in an intermediate layer or between two isolating layers so as to better isolate it from other electrical circuits, electrode contacts or electronics.

A thin film may also comprise a coating layer. A coating layer may beneficially be applied on one or on each face of the thin film. In particular a coating layer may be applied over anodic/cathodic circuits, but not over electrode contacts. The coating is chosen to be an electrically isolating material.

The compactness of the battery may be optimized in the direction of the width of the thin film with a multilayer thin film. Indeed the anodic/cathodic circuits may not need to be placed on an extra-width portion of the thin film but may on the contrary run in between two electrode contacts respectively placed on opposite faces of a same portion of thin film and from which the anodic/cathodic circuit is electrically isolated by at least one isolating layer of the thin film.

The thin film may comprise at least one electrically conductive via crossing through at least one layer, said via being electrically connected to a first electrically conductive portion in a first layer and to a second electrically conductive portion in a second layer.

Such via allows connecting for example a first anode (or cathode) contact disposed on a first outer face of the thin film and at least a second anode (respectively cathode) contact disposed on a second opposite outer face of the thin film. Such via may also ensure an electrical connection between an electrode contact on the surface of the thin film and an electrical circuit placed in the thin film, for example in an intermediate layer of the thin film.

In a battery according to the invention, a plurality of battery cells may be stacked together between one or more bent section of the thin film.

However, the battery may beneficially comprise only one battery cell between two consecutive folds of the thin film.

That means that in such battery, only one half cell of each type separated from each other by one separator, is placed between two consecutive folds of the thin film. Thereby the battery may be made very compact. In particular in such configuration, the electrode contact can easily be printed on the thin film and also ensure the electrode collector function. Moreover the battery can more easily be manufactured through deposition, additive manufacturing, lamination, all techniques providing for compact manufacturing of battery elements.

A battery according to the invention beneficially comprises a plurality of battery cells. The battery cells may be arranged in one or more stack(s) of battery cells. In such stack of battery cells, the cells may be arranged in a pattern with anode and cathode alternatively in which the cells all have the same orientation (CA-CA-CA... pattern), or in a pattern with two anodes and then two cathodes alternatively in which the cells are arranged back-to-back (CA-AC-CA-AC-... pattern). Indeed any pattern is possible according to the invention since the thin film may be placed between each individual battery cell, and is beneficially made of at least one layer of electrically insolating material such that every battery cell (and half-cell) may be electrically isolated from another battery cell.

The thin film may be arranged in a meandering pattern between a plurality of battery cells.

To do so, the thin film comprises on a first face and/or on a second face alternatively an anode contact and a cathode contact. More particularly a thin film according to the invention comprises a plurality of anode contacts and a plurality of cathode contacts on a same face, with a pattern such as: A-C-A-C-A-C-A-etc. More particularly a thin film according to the invention comprises a plurality of anode contacts and a plurality of cathode contacts on each of its two faces.

The anodic circuit and/or the cathodic circuit may be printed on the thin film.

Different known printing manufacturing methods applicable to printed circuit boards or other additive manufacturing examples may be used to print the anodic/cathodic circuit, the electrode contacts, the integrated electronics, and/or other circuitry. For example inkjet printing methods may be used in which an electrically conductive ink is applied to the thin film. Prefabricated conductive elements may also be arranged and attached to the foil. The price and time of manufacturing can therefore be limited by applying the electrode contact in a very thin layer.

The thickness of the anode contact and/or of the cathode contact may be smaller than the thickness of an anodic circuit and/or of a cathodic circuit.

The anodic/cathodic circuit(s) may be more robust than the electrode contact by being made thicker. Indeed the electrode contacts are placed between relatively flat surfaces of the battery cells and therefore do not need to be specifically robust in particular robust to movements or flexion of the thin film. Electrical circuits on the contrary extend in the bent sections of the thin film and are more exposed to movements since they are outside the battery cells stack, and as such need to be more robust. The different thicknesses may for example be obtained by back-etching the areas of the printed electronics which shall be thinner.

The thicknesses (and/or widths) of the anodic/cathodic circuit(s) can be adjusted to fit the required current carrying capacity.

The thickness of the thin film may also be different in a first portion of the thin film than in a second portion of the thin film. More particularly, a first section of the thin film that is to be placed against a battery cell - and more particularly between two battery cells, may be thinner than a second section of the thin film that is to be bent between two battery cells. The bent section is thereby more robust to resist the flexion and potential movements, while the overall weight of the thin film is kept low by being kept thin where it does not need to be robust. Such differences in thickness may for example be obtained by the use of a different number of layers in different portions of the thin film.

The thin film may comprise integrated electronics different from the temperature control device.

The integrated electronics may include for example but not exclusively: switches, sensors (including sensors contacts and wirings), micro-heater, analog and/or digital electronics, etc. Such sensors may comprise for example a temperature sensor, a chemical sensor, a gas sensor (for example a hydrogen sensor), a liquid sensor, a voltage or current sensor, a pressure sensor (for example based on pressure sensitive ink), a strain sensor, a resistive sensors and contacting through four-wire-measurements, etc. Besides one or more electronic component or electrical connection may also comprise a self-test, for example by resistance measurement.

The integrated electronics may at least partially be printed on the thin film or may be integrated by a hybrid integration of the components such as for conventional electronic chips. More particularly the inventors have determined that when the lifetime of such printed electronics is longer than the lifetime of the battery cells, allowing the integrated electronics to be fully printed on the thin film.

The miniaturization and the low cost of fabricating a thin film with many integrated electronics allow placing many more sensors in the battery while remaining compact and at controlled costs of manufacturing. A high number of integrated electronics such as sensors and switches therefore permits a closer monitoring of the battery and potential early counteractions in case of safety or longevity issues.

The integrated electronics may be used for health monitoring of one or more battery cells. The integrated electronics may also be used for usage monitoring of one or more battery cells. For example the integrated electronics may provide the function of a local discharging or local charging (for example to balance the charges of two battery cells with different charge) in order to check the charge characteristics of an individual battery cell and/or harmonize the charge of the battery cells.

The integrated electronics may be used to ensure the safe functioning of the battery, for example by allowing the detection of a malfunction and/or the switching off of one or more battery cells.

The integrated electronics may also be used to manage the battery use in real-time for example by switching on/off one or more battery cells or by modifying the wiring of the battery so as to change its output characteristics. The integrated electronics may thus comprise data and power management components and circuitry.

The integrated electronics may be beneficially placed in the bent sections of the thin film. One or more cooling and/or heating element, may also be placed in a bent section of the thin film. Such arrangement allows for a more compact thin film, with the portions of the thin film placed in contact with the battery cells being mainly dedicated to electrode contact, and the portions of the thin film placed outside the stack of battery cells supporting the integrated electronics. Thereby the surface of the thin film may be optimized with large electrode contact surfaces and surfaces of thin film in the bent sections occupied by the integrated electronics and the electrical circuits.

The width of the thin film may be larger than the width of each battery cell.

Such geometry of the thin film permits to maximize the contact surface between the electrode contact of the thin film and the collecting face of the electrode, while placing the electrical circuits on the additional width of the thin film. Moreover additional elements such as integrated electronics may also be placed on the additional width of the thin film.

The longitudinal compactness (in the direction of the thickness of the battery cells) of the battery may be improved by using a one layer or few layers thin film, while using the additional width of the thin film to place the electrical circuits for example.

The thin film may comprise a first electrical (anodic/cathodic) circuit for the charge of a battery cell and a second electrical (anodic/cathodic) circuit for the discharge of this battery cell. This may in some embodiments allow reducing the amount of electronics to be embedded on the thin film such as for example the number of switches for the charging/discharging cycles.

Furthermore, in a battery according to the invention:
- the surface of the anode contact which is in electrical contact with the collecting face of the anode, may be smaller than the surface of the collecting face of the anode, such that a portion of the collecting face of the anode is in contact with a portion of the thin film different from the anode contact, and/or
- the surface of the cathode contact which is in electrical contact with the collecting face of the cathode, may be smaller than the surface of the collecting face of the cathode, such that a portion of the collecting face of the cathode is in contact with a portion of the thin film different from the cathode contact.

The surface of the electrode contact which is in electrical contact with the collecting face of the electrode may be the whole surface of the electrode contact or may be only a portion of it.

In some embodiments, this allow to have a thin film of the same width or narrower than the width of a battery cell, and more particularly than the width an electrode collecting face.

Thus, according to such embodiments of the invention, at least a portion of the electrode's collecting face is in direct contact with a non-electrically conduction portion of the thin film, in particular with a portion of the thin film which is not an electrode contact. Said otherwise, at least a portion of the electrode's collecting face is in direct contact with a non electrically conductive layer of the thin film, for example a polymeric material of the thin film and/or a coating of the thin film. When the electrode contact is at least partially made through a metallization, the thin film may thus be only partially metallized in the electrical contact area with the collecting face of an electrode. The electrode contact may for example present an electrically conductive surface with holes that do not comprise the electrically conductive material such that the underneath material of the thin film is exposed in these holes' areas and put in contact with the electrode's collecting face. The electrode contact may comprise a high variety of other shapes such as fingers, star shape, etc.

Thereby a chemical and/or mechanical bonding may be established between the thin film and the electrode's material. In particular if the thin film comprises a polymer and the electrode comprises a polymer as well, a bonding may appear between the two polymers. It may for example be the case with a thin film comprising thermoplastic on its outer layer and an electrode made of fibers impregnated in a resin matrix.

Moreover the portion of the thin film which is arranged to be in contact with the electrode's collecting face and which is not electrically conductive may comprise a layer of a bond-promoting material. The bond-promoting material must be chosen so as to promote a chemical and/or mechanical bonding between the thin film and the electrode's material.

A battery according to the invention may further comprise:
- at least two stack of battery cells, each stack comprising:
   - at least two battery cells, and
   - a thin film,
- a flexible connecting device adapted to be in electrical contact with at least two different thin film.

Thereby a battery with a high storage capacity may be obtained while being particularly compact and light. Besides the design of such battery is facilitated as it can easily be divided into a plurality of stacks so as to be fitted in the volume available for the installation of the battery.

In particular the battery may comprise a plurality of battery stacks each comprising a plurality of battery cells according to the invention and a thin film according to the invention, that is to say a thin film at least partially flexible and adapted to be bent between the anode contact and the cathode contact so as to ensure an electrical contact simultaneously:
- between the anode contact and a collecting face of an anode on a first face of a battery cell, and
- between the cathode contact and the collecting face of the cathode of said battery cell, the cathode being on a second face opposite the first face of the battery cell.

The flexible connecting device may be of different nature. However it may beneficially be made of an at least partially flexible film, called connecting film. In particular the connecting film may be a flexible thin film, for example of a similar nature and construction as said thin film. The flexible connecting film may be have similar features to the thin film, ie with one or more layers, and/or with integrated electronics, and/or through additive manufacturing and/or lamination, etc.

The flexible connecting device may comprise at least an electrical circuit, for example a printed electrical circuit. The flexible connecting device may comprise a plurality of electrical circuit. For example, the flexible connecting device may be adapted and arranged in the battery so that an electrical circuit of the flexible connecting device may be adapted to contact one or more anode connector (or cathode connector) so as to collect charges from the connector(s) and direct them to a main connector borne by the flexible connecting device.

The flexible connecting device may be installed in a meandering pattern between a plurality of battery stacks.

The flexible connecting device may comprise at least part of a temperature control device.

Alternatively, in some embodiments of the invention, the thin film may run successively between a plurality of stacks. This also provides a very compact and easy to manufacture battery.

The invention extends to a thin film for a battery comprising at least one temperature control device, wherein the thin film comprises a plurality of anode contacts adapted to electrically contact the anodes of the battery cells, and a plurality of cathode contacts adapted to electrically contact a cathode of a battery cell,

wherein the thin film is adapted to ensure an electrical contact simultaneously
- between the anode contacts and the anodes, and
- between the cathode contacts and the cathodes,
and wherein the temperature control device comprises at least one Peltier element integrated in the thin film, wherein the thin film comprises at least one electrical circuit to address the one or more Peltier elements.

The thin film comprises at least one Peltier element. In particular the thin film may comprise at least one thin Peltier element. The at least one Peltier element may be placed in a portion of the thin film adapted to be placed in contact with a battery cell, for example in a straight section of the thin film adapted to be placed between two battery cells. Thereby the Peltier element may cool down and/or heat up a battery cell in an efficient manner. Besides, with Peltier elements having a heating side opposed to the cooling side, a battery cell may be cooled down by the Peltier element while an adjacent battery cell may be heated up by the same Peltier element.

The thin film for a battery comprises
- a plurality of anode contacts adapted to electrically contact an anode of a battery cell of the battery,
- a plurality of cathode contacts adapted to electrically contact a cathode of a battery cell of the battery,

The thin film for a battery may be:
- at least partially flexible,
- adapted to be bent between the anode contact and the cathode contact so as to ensure an electrical contact simultaneously:
   - between the anode contact and a collecting face of an anode on a first face of a battery cell, and
   - between the cathode contact and the collecting face of the cathode of said battery cell, the cathode being on a second face opposite thefirstface of the battery cell.

In particular the thin film is adapted to be bent between the anode contact and the cathode contact so as to ensure an electrical contact simultaneously:
- between the anode contact and a collecting face of the anode of a batterycell, and
- between the cathode contact and the collecting face of the cathode of the same battery cell.

The invention also extends to a method for the manufacturing of a battery comprising:
obtaining a plurality of battery cells, each comprising an anode and a cathode;
obtaining a thin film,
   - comprising at least one temperature control device comprising at least one Peltier element integrated in the thin film,
   - comprising at least one electrical circuit to address the one or more Peltier elements,
   - comprising a plurality of anode contacts adapted to electrically contact the anodes of the battery cells,
   - comprising a plurality of cathode contacts adapted to electrically contact the cathodes of the battery cells,
   - adapted to ensure an electrical contact simultaneously
      ∘ between the anode contacts and the anodes, and
      ∘ between the cathode contacts and the cathodes,
The method may also comprise obtaining a battery cell comprising:
   a separator,
   an anode having an electrolytic face in contact with the separator and a collecting face opposite its electrolytic face,
   a cathode having an electrolytic face in contact with the separator and a collecting face opposite its electrolytic face,
   said separator being arranged between the anode and the cathode such that the collecting face of the anode and the collecting face of the cathode are arranged on opposite sides of the separator.

The method may also comprise obtaining a thin film:
- comprising at least one anode contact adapted to electrically contact the anode,
- comprising at least one cathode contact adapted to electrically contact the cathode,
- at least partially flexible.

The method may also comprise bending the thin film between the anode contact and the cathode contact so as to ensure an electrical contact simultaneously:
- between the anode contact and the collecting face of the anode, and
- between the cathode contact and the collecting face of the cathode.

Moreover at least some of the integrated electronics of the thin film may be used to control the manufacturing process of the thin film and/or of the battery. For example the temperature and/or pressure in the thin film may be measured during one or more manufacturing steps. Besides sensors permitting dielectric analysis may also be integrated in the thin film to monitor some manufacturing steps. In particular the curing of a laminated thin film may be monitored through one or more of such measurements in order to reach a good degree of curing.

The electrodes and the separator of the battery cell are may be made thin. In particular the electrodes and the separator may have a thickness of less than 0,5mm each, in particular less than 0,2mm, for example of 0,1 mm. Thereby a battery cell according to the invention may be as thin as 0,3mm.

The method of manufacturing may further comprise depositing at least part of a battery cell on the thin film.

Depositing may be achieved by many different techniques including: additive layer manufacturing, lamination, metallization, etc, or combination of such techniques.

In particular an electrode may be laminated on the thin film directly with an electrode contact placed in between the thin film and the electrode. Besides an electrolytic separator may also be deposited on the electrode, for example by lamination.

Alternatively or in combination, one or more portions of the thin film may be manufactured directly on the electrode, in particular on the electrode's collecting face. In particular the electrode's contact may be deposited directly on the electrode. Other portions such as a polymer layer of the thin film may also be directly deposited on the battery cell.

A Peltier element may also be deposited on the thin film. In particular layers of the Peltier element may be deposited on or between layers of the thin film and be laminated.

In some cases, depending on the thickness of a battery cell and on the material(s) of the thin film and in particular of the electrical circuits and/or electronics it may comprise, the bend of the thin film between two faces opposite faces of a battery cell may have a radius to high for the thin film to keep its mechanical and/electrical integrity.

The method may also comprise forming at least one heat-channel adapted to transport heat in at least a layer of the thin film.

Different methods may be used to manufacture the heat channel. For example, a heat-channel may be manufactured by embossing a face of a first layer of a thin film, and then joining (for example by lamination) a second layer of a thin film on the embossed face of the first layer of thin film. Alternatively, a heat-channel may be obtained by laser ablation of a portion of the thin film.

Therefore, a method according to the invention may further comprise attaching a first segment of thin film comprising the anode contact to a second segment of thin film comprising the cathode contact.

Indeed the thin film may then be produced in segments and be each placed between a couple of battery cells. In a previous or subsequent step the thin film segments are attached to each other. Besides the electrical circuits are beneficially connected to each other during the attachment step in order to ensure an electrical continuity between two segments of thin film. The method therefore beneficially comprises electrically connecting at least one electrical circuit of the first segment of thin film to at least one electrical circuit of the second segment of thin film. Such electrical connection may be realized for example by simple mechanical contact, by welding, by soldering, etc. Moreover the electrical connections between two segments of thin film may be subjected to a local treatment by laser or electron beams. The attachment of the segments of the thin film therefore ensure a mechanical and electrical bonding. At least a section of each segment of thin film is bent, but only with a small bend, much smaller than the 180 degrees of bend required in case of a one-piece thin film.

The method may comprise, before the first segment of thin film is attached to the second segment of thin film: placing the first segment of thin film between a first battery cell and a second battery cell with an anode contact of the first segment of the thin film electrically contacting the collecting face of an anode of the first battery cell or of the second battery cell, placing the second segment of thin film between a second battery cell and a third battery cell with a cathode contact of the second segment of thin film electrically contacting the collecting face of a cathode of the second battery cell or of the third battery cell.

The invention also extends to other possible combinations of features described in the above description and in the following description relative to the figures. In particular, the invention extends to batteries comprising features described in relation to the thin film and/or the method for manufacturing a battery ; the invention extends to thin films comprising features described in relation to the battery and/or the method for manufacturing a battery ; the invention extends to methods for manufacturing a battery comprising features described in relation to the battery and/or the thin film.

Some specific exemplary embodiments and aspects of the invention are described in the following description in reference to the accompanying figures.
Figure 1 is a representation of a cross-section of a battery embodiment according to the invention.
Figure 2 is a representation of a cross-section of a detailed view of a battery cell and a thin film according to Figure 1.
Figure 3a is a representation of a first layer of a thin film embodiment according to the invention.
Figure 3b is a representation of a second layer of the thin film of figure 3a.
Figure 3c is a representation of a third layer of the thin film of figures 3a and 3b.
Figure 4 is a representation of a cross-section of a battery during a manufacturing process according to the invention.
Figure 5 is a representation of a face of a thin film embodiment according to the invention.
Figure 6 is a cross-section representation of a battery embodiment according to the invention.
Figure 7 is an exploded view in cross-section of layers of a thin film embodiment according to the invention.

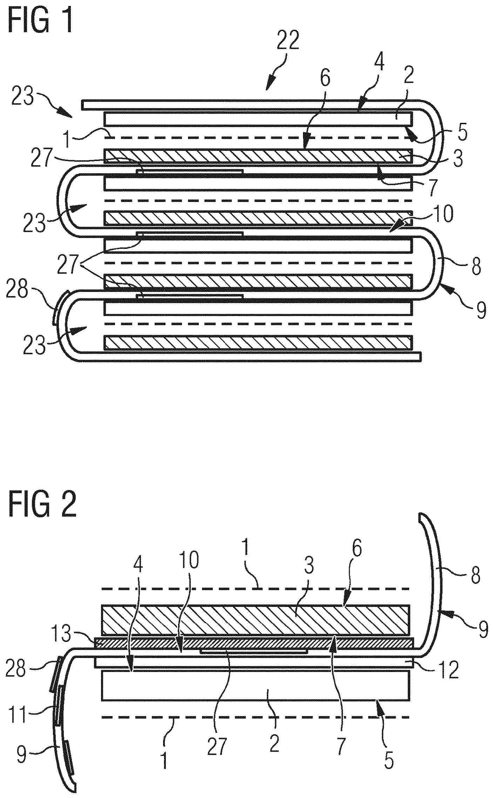

In Figure 1 a first specific embodiment of a battery according to the invention is represented.

The battery 22 comprises a plurality of battery cells 23 stacked together in a pile. More particularly in this embodiment four battery cells are represented.

Each battery cell comprises an anode 2 and a cathode 3 separated from each other by a separator 1. The anodes 2 comprise an electrolytic face 5 in contact with the separator 1. The anodes 2 comprise a collecting face 4 opposite the electrolytic face 5.

The cathodes 3 comprise an electrolytic face 6 in contact with the separator 1. The cathodes 3 comprise a collecting face 7 opposite the electrolytic face 6.

A thin film 8 is placed in a meandering pattern between the battery cells 23. The thin film therefore has some bent sections 9. Some straight sections 10 of the thin films are between two subsequent battery cells 23. The battery 22 comprises only one battery cell between 2 successive straight sections 10 of the thin film 8. Therefore, the thin film is bent in a bent section 9 in order to ensure an electrical contact with each of the two collecting faces (4, 7) of a battery cell, the collecting faces (4, 7) being respectively of an anode 2 and of a cathode 3, the collecting faces (4, 7) facing away from each other.

The battery 22 comprises a temperature control device which comprises Peltier elements (27, 28). The Peltier elements (27, 28) are integrated in the thin film 8. More particularly the thin film comprises thin Peltier elements 27 in the straight sections 10 in between each pair of battery cells 23. These Peltier elements 27 may be used to transfer heat between two adjacent battery cells 23.

Besides, the thin film 8 also comprises a thin Peltier element 28 in the bent section 9 of the thin film 8. Such Peltier element 28 may be used to improve the extraction of heat from the battery when in combination with a heat extraction device such as for example a fluid circulation device adapted to circulate a fluid around the battery cells and the bent portions 9 of the thin film 8.

In figure 2 a portion of the thin film 8 is represented with more details.

The straight section 10 of the thin film bears an anode contact 12 and a cathode contact 13. The anode contact 12 is arranged on a first face of the thin film 8 while the cathode contact 13 is arranged on the opposite face of the thin film 8.

The collecting face 4 of the anodes 2 are in contact with the anode contact 12 of the thin film 8. The collecting face 4 of the cathodes 3 are in contact with the cathode contact 13 of the thin film 8.

In this embodiment, the anode contact 12 also ensures the function of an anode collector for the anode 2, so that the material of the anode 2 is directly in contact with the anode contact 12. The anode contact 12 is beneficially a metallized layer on the thin film. The cathode contact 13 also ensures the function of a cathode collector for the cathode 3, so that the material of the cathode 3 is directly in contact with the cathode contact 13. The cathode contact 13 is beneficially a metallized layer on the thin film 8.

The thin film also comprises electrical circuits to transport electrons to and from the electrode contacts (12, 13).

The thin film 8 comprises integrated electronics 11 such as for example a temperature sensor, a pressure sensor, a chemical sensor, a gas sensor, a liquid sensor, a voltage or current sensor, etc. The integrated electronics 11 are beneficially integrated in one or more bent sections 9 of the thin film 8, such that they do not occupy space in the straight section, allowing the contact surface between the anode contact 12 and the collecting face 4 of the anode 2, and between the cathode contact 13 and the collecting face 7 of the cathode 3 to be maximal. Besides the integrated electronics 11 may also be better cooled down in a bent section 9 of the thin film 8 than in between two battery cells 23.

The thin film 8 comprises a Peltier element 27 in the straight section 10 of the thin film 8. The thin film 8 also comprises a Peltier element 28 in the bent section 9 of the thin film 8.

The thin film 8 may be made of one layer of Polyethylenimine (PEI) on which the electronics 11 are integrated, and the electrode contacts (12, 13) and electrical circuits are printed. The electrode contacts (12, 13) and electrical circuit may be for example printed with the same techniques as for printing a circuit board. The anode contact 12 and the cathode contact 13 may be made of different materials, in particular when they are to also ensure the function of electrode collector. In particular the electrode contacts (12, 13) may comprise a metal foil such as for example an aluminum, aluminum alloy, copper or copper alloy foil.

The anode 2 may be made of one or more layer(s) of a composite material such as carbon fibers impregnated in a matrix of HexFlow^{®} RTM6 resin commercialized by Hexcel^{®}.

The cathode 3 may be made of one or more layer(s) of a composite material such as carbon fibers coated with a ferritic oxide, impregnated in a matrix of HexFlow^{®} RTM6 resin commercialized by Hexcel^{®}.

The separator 1 may be made of one or more layer(s) of a composite material such as glass fibers impregnated in a matrix of HexFlow^{®} RTM6 resin commercialized by Hexcel^{®}.

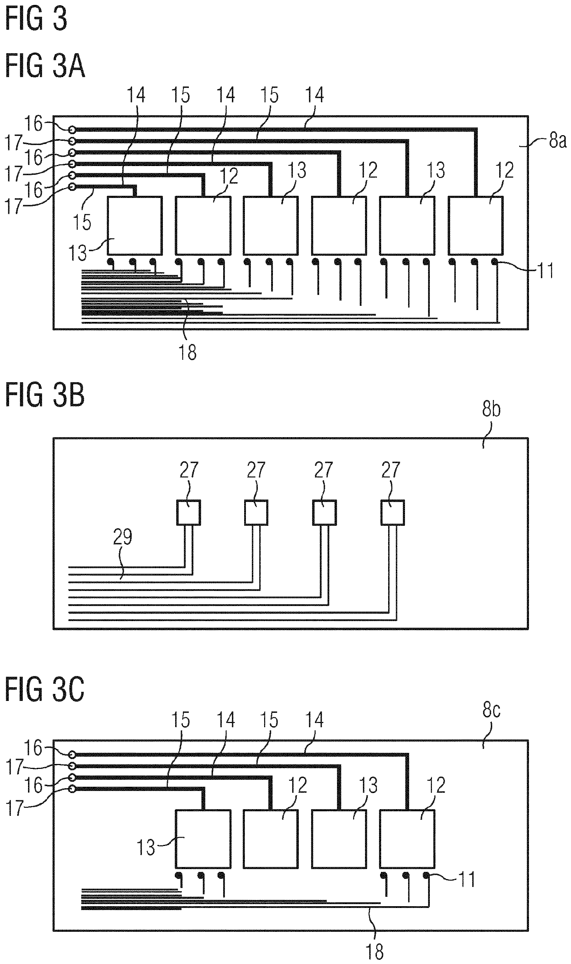

In figure 3a the top face 19 of an upper layer 8a of a thin film is presented. In figure 3c a bottom face 20 of a lower layer 8c, opposite the top face 19, of the thin film is presented. The two faces represent the two sides of a thin film according to this specific embodiment.

Moreover, in figure 3b an intermediate layer 8b of the thin film is presented. The intermediate layer 8b is to be placed between the upper layer 8a and the lower layer 8c during manufacturing of the thin film.

The thin film comprises anode contacts 12 and cathode contacts 13 on each face in order to contact anodes and cathodes on each sides of a plurality of battery cells when placed in a meandering pattern between battery cells, such as the pattern presented in relation to figure 1. Each face of the thin film comprises a series of alternated anode contacts 12 and cathode contacts 13.

In the embodiment represented on figures 3a and 3c, the electrode contacts (12, 13) have a full square shape in order to optimize the contact surface with their respective electrode. However the electrode contacts (12, 13) may have different shapes in other embodiments, including shapes that do not correspond in shape and/or in surface to the collecting face of the corresponding electrode (2, 3). In particular in some embodiments, the electrode contacts (12, 13) may alternatively or in combination have: finger shapes, holes, star shapes, etc. in order to ensure that at least a portion of the thin film 8 base material - in particular a thermoplastic such as a PEI - will be in direct contact with the material of the electrode (2, 3) - in particular a polymer matrix of a composite electrode (2, 3).

Each anode contact 12 is connected to an individual anodic electrical circuit 14. The anodic electrical circuits 14 each lead to an anode connector 16 adapted to connect an external cable or electric device to the thin film 8. Each cathode contact 13 is connected to an individual cathodic electrical circuit 15. The cathodic electrical circuits 15 each lead to a cathode connector 17 adapted to connect an external cable or electric device to the thin film 8. Thereby the current and voltage of each battery cell may be managed individually and independently by an electric device (not depicted). For example such device may:
- isolate electrically a battery cell while still using another battery cell, and/or
- charge a battery cell while discharging another battery cell, and/or
- add the voltages of two or more battery cells, and/or
- add the current of two or more battery cells,
- etc.

Having individual electrical circuits (14, 15) for each electrode (2, 3) in a battery stack allows using a flexible thin film with thin electronics, particularly with thin electrical circuits (14, 15).

The electrical circuits (14, 15) are placed sideways from the electrode contacts (12, 13) such that the thin film 8 is wider than the battery cells 23. This allows to use a thin film 8 particularly thin, for example comprising only one layer of base material, so as to obtain a cheap to manufacture and compact battery in the direction of the stack of battery cells.

In the embodiment of figures 3a and 3c, the thin film 8 comprises integrated electronics 11 placed in straight sections 10 of the thin film 8, sideways from the electrode contacts (12, 13). In such embodiments, the thin film 8 is therefore wider than the battery cells 23, to allow space for the integrated electronics 11. The thin film 8 also comprises electrical circuits 18 for the integrated electronics 11. However it is may also be possible to integrate wireless integrated electronics 11 on the thin film. Moreover, although not represented, all or part of the electronics and their respective electrical circuits may be placed on the intermediate layer 8b.

In figure 3b four thin Peltier elements 27 are represented. The thin film also comprises electrical circuits 29 for the power supply of the Peltier elements. Each Peltier element comprises its own individual electrical circuit, so that they may be addressed and therefore activated independently. Thereby the temperature of the battery cells may be controlled individually.

The method of manufacturing a Peltier element (27, 28) may for example be the method described in "Fabrication of flexible thin-film thermoelectric generators", by Chun-Ching Hsiaoa and Yi-Syuan Wu, in Journal of the Chinese Institute of Engineers, Vol. 34, No. 6, September 2011, 809-816, or the method described in "Fabrication of flexible thermoelectric thin film devices by inkjet printing", by Ziyang Lu et al., in Small, Special issue: Nanomaterials for energy and water management, September 10, 2014, Volume 10, issue 17, pages 3425-3587.

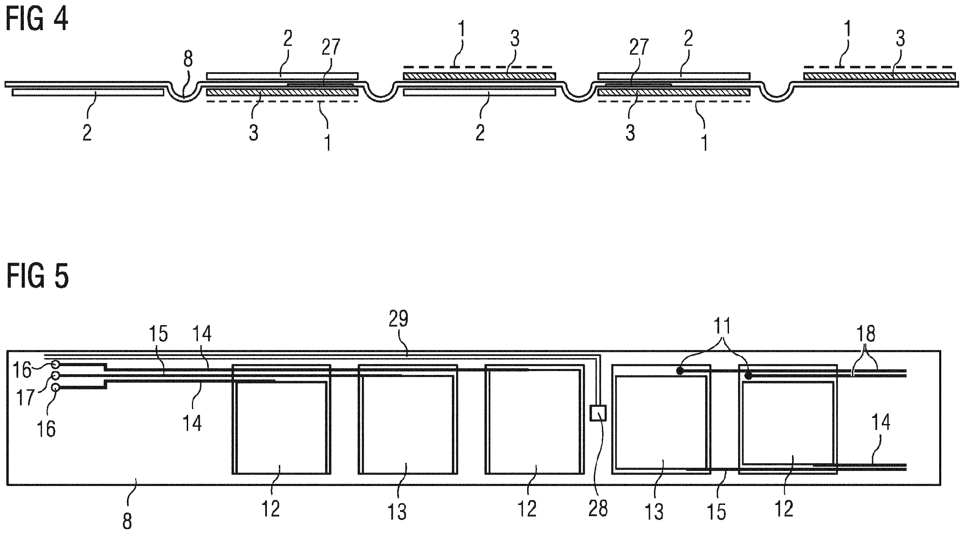

In figure 4 a battery according to the invention is depicted at an intermediate manufacturing step. In this manufacturing process:
- a base layer for a thin film 8 has been provided, which comprises thin Peltier elements 27 integrated in the thin film 8 - for example with a layered thin film 8 of the figures 3a, 3b and 3c,
- anode contacts 12 and cathode contacts 13 have been deposited on the thin film 8,
- integrated electronics 11 and electrical circuits (14, 15) (not represented) have been deposited on the thin film 8,
- anodes 2 and cathodes 3 have been deposited on the thin film 8,
- separators 1 have been deposited on the cathodes 3.

In a subsequent step to the state represented in figure 4, the thin film 8 may be folded in a meandering pattern so as to join each anode 2 with a nearby separator 1 and thereby form the battery cells and the battery.

The deposition steps may be made through lamination, additive layer manufacturing, etc. The electrodes (2, 3) may be deposited in a plurality of steps, for example as a plurality of successive layers.

In Figure 5 a face of another embodiment of a thin film 8 is presented.

As in the previous embodiment of the Figures 3a and 3c, in this embodiment each anode contact 12 is connected to an individual anodic electrical circuit 14. The anodic electrical circuits 14 each lead to an anode connector 16 adapted to connect an external cable or electric device to the thin film 8. Each cathode contact 13 is connected to an individual cathodic electrical circuit 15. The cathodic electrical circuits 15 each lead to a cathode connector 17 adapted to connect an external cable or electric device to the thin film 8.

However, in this embodiment, the electrode contacts (12, 13) are smaller than the collecting face of the electrodes of the battery cells. Besides, the electrical circuits (14, 15) are at least partially overlaid by at least one electrically isolating layer so that an anode (or a cathode) of a battery cell may not electrically contact a cathodic circuit 15 (respectively an anodic circuit 14).

This allows to place the electrical circuits (14, 15) within the width of a battery cell, thereby contributing to obtaining a very compact battery in the direction of the width of the thin film 8.

In the same way the size of the electrode contacts (12, 13) may be slightly reduced - compared to the size of the collecting face of the electrodes - in order to integrate electronics such as sensors 11 and their wiring 18.

The thin film 8 also comprises a Peltier element 28 in between two electrode contacts (12, 13). The Peltier element 28 will therefore be in a bent section of the thin film once the thin film has been placed in a meandering pattern between battery cells. The Peltier element 28 may be placed on an external face of the thin film. The thin film 8 also comprises an electrical circuit 29 for the power supply of the Peltier element 28.

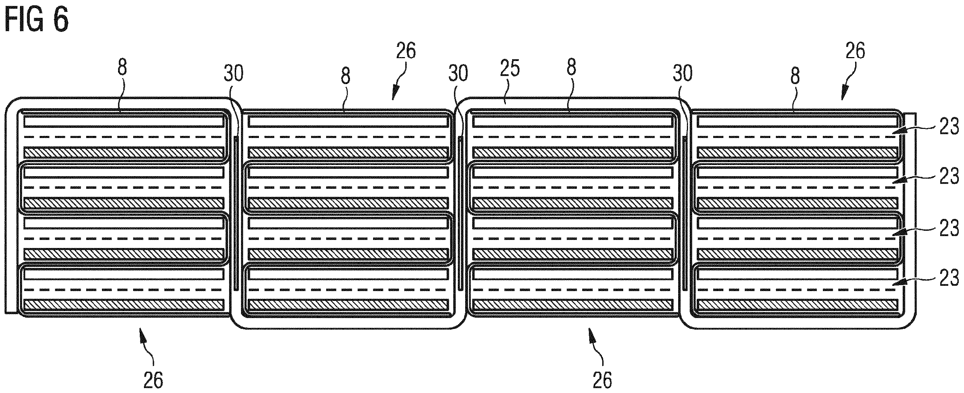

Figure 6 represents a battery 22 comprising four stacks 26 of each four battery cells 23. Each stack 26 comprises a thin film 8 according to the invention, arranged in a meandering pattern between the battery cells 23.

Moreover, the battery comprises a flexible connecting device in the form of a flexible connecting film 25. The flexible connecting film 25 is arranged in a meandering pattern between the battery stacks 26.

The thin films 8 and the flexible connecting film 25 are adapted and arranged in the battery so as to have contact points for example in the bent sections of the thin films 8 or in the straight sections of the thin film 8 that are at the bottom or at the bottom of a battery stack 26. This allow the thin films 8 to be in electrical contact with the flexible connecting film 25. For example an anodic circuit (or cathodic circuit) of a thin film may be in electrical contact with an electrical circuit of the flexible connecting film 25, said electrical circuit of the flexible connecting film 25 leading to a main anode connector (respectively cathode connector) of the battery.

Moreover the flexible connecting film 25 comprises Peltier elements 30. The Peltier elements 30 are placed in the portions of the flexible connecting film 25 that are in between two battery stacks 26, so that the Peltier elements 30 may modify the temperature of one or two battery stacks 26 simultaneously. The flexible connecting film 25 may be thicker than the thin film 8 and may therefore also include, in combination with the Peltier elements 30, some micrometric heat-channels (not represented) within the thickness of the flexible connecting film 25 in order to transport heat from or to the battery stacks 26 in general and from or to the Peltier elements 30 in particular.

In other embodiments, one or more Peltier elements may be arranged so that the heating side of a Peltier element and the cooling side of the Peltier element are placed at different locations on a thin film 8 and/or on the flexible connecting device - in particular flexible connecting film. Thereby heat may be transported from a battery stack or a group of battery stack towards another battery stack or group of battery stacks.

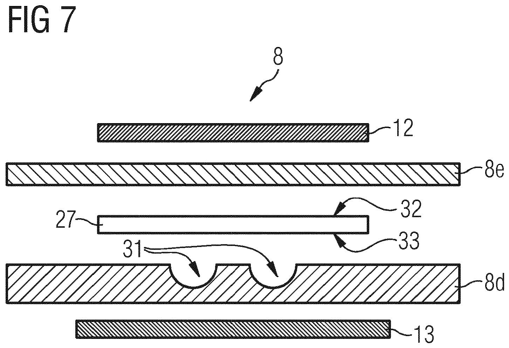

In figure 7 different layers of a thin film 8, for example before lamination are represented in a transversal (along the width) cross section.

The thin film 8 comprises a first layer 8e adapted to receive an anode collector 12 on its upper face. It comprises a second layer 8d adapted to be joined to the first layer 8e, for example during a lamination process. The second layer 8d is adapted to receive a cathode collector 13.

The second layer 8d has previously been embossed so as to exhibit two longitudinal channels 31. The channels 31 are heat-channels adapted to permit the circulation of a fluid such as air, water or any other cooling fluid. The channels 31 are closed during the lamination process by the lamination of all layers here represented together.

Moreover a Peltier element 27 is placed in between the first layer 8e and the second layer 8d of the thin film 8. The cooling face 32 of the Peltier element 27 is oriented towards the anode collector 12 so as to be able to cool down an anode of a battery cell. The heating face 33 of the Peltier element 27 is placed in regards to and towards the heat-channels 31 so that heat produced on the heating face 33 of the Peltier element 27 may be efficiently extracted by the circulation of a fluid in the heat-channels 31.

Thereby a portion of thin film according to the embodiment of figure 4 may be obtained.

The construction comprising the first layer 8e, the Peltier element 27 and the channels 31 may be reciprocated on the opposite face of the second layer 8d so as to obtain an independent temperature control of two battery cells placed on opposite faces of the thin film.

## Claims

1. Electrical battery (22) comprising:
a plurality of battery cells (23), each comprising an anode (2) and a cathode (3), wherein a thin film (8) comprising at least one temperature control device is arranged between the battery cells (23), **characterized in that** the thin film (8)
comprises a plurality of anode contacts (12) adapted to electrically contact the anodes (2) of the battery cells (23),
comprises a plurality of cathode contacts (13) adapted to electrically contact the cathodes (3) of the battery cells (23),
is adapted to ensure an electrical contact simultaneously
between the anode contacts (12) and the anodes (2), and
between the cathode contacts (13) and the cathodes (3),
wherein the thin film (8) comprises a plurality of layers (8a, 8b, 8c) comprising at least a first layer (8a) comprising an electrically conductive portion and a second layer (8c) comprising an electrically conductive portion and is placed in a meandering pattern between the battery cells (23),
whereas a straight section of the meandering pattern is placed between two successive battery cells (23) and whereas the bent section of the meandering pattern ensures an electrical contact with each of two specific collecting faces of the battery cells (23),
and that the temperature control device comprises at least one Peltier element (27, 28, 30) integrated in the straight section of the meandering pattern of the thin film (8), wherein the thin film (8) comprises at least one electrical circuit (29) to address the one or more Peltier elements (27, 28, 39).

2. Battery according to claim 1,
further **characterized in that** the temperature control device comprises a cooling device (27, 28, 30).

3. Battery according to any of claim 1 or 2,
further **characterized in that** the temperature control device comprises an active cooling device (27, 28, 30).

4. Battery according to any of claim 1 to 3,
further **characterized in that** the temperature control device comprises a plurality of cooling and/or heating devices (27, 28, 30), and that at least two cooling and/or heating devices may be controlled independently from each other.

5. Battery according to any of claim 1 to 4,
further **characterized in that** the temperature control device comprises at least one material that can undergo an endothermic reaction.

6. Battery according to any of claim 1 to 5,
further **characterized in that** the thin film (8) comprises at least one heat-channel (31) adapted to transport heat.

7. Battery according to any of claim 1 to 6,
further **characterized in that** it comprises at least two battery cells (23), and the temperature control device is adapted to transport heat from a first battery cell to a second battery cell.

8. Battery according to any of claim 1 to 7,
further **characterized in that**:
the anode contact (12) is configured to form an anode collector of the anode (2), and/or
the cathode contact (13) is configured to form a cathode collector of the cathode (3).

9. Battery according to one of claim 1 to 8,
further **characterized in that** it comprises only one battery cell (23) between two consecutive folds of the thin film (8).

10. Battery according to one of claim 1 to 9,
further **characterized in that** the thin film (8) comprises integrated electronics (11) different from the temperature control device.

11. Method for the manufacturing of a battery (22) comprising:
obtaining a plurality of battery cells (23), each comprising an anode (2) and a cathode (3);
fitting a thin film (8) comprising at least one temperature control device between the battery cells (23);
**characterized in**
**that** the thin film (8)
comprises a plurality of anode contacts (12) adapted to electrically contact the anodes (2) of the battery cells (23),
comprises a plurality of cathode contacts (13) adapted to electrically contact the cathodes (3) of the battery cells (23),
is adapted to ensure an electrical contact simultaneously
between the anode contacts (12) and the anodes (2), and
between the cathode contacts (13) and the cathodes (3),
wherein the thin film (8) comprises a plurality of layers (8a, 8b, 8c) comprising at least a first layer (8a) comprising an electrically conductive portion and a second layer (8c) comprising an electrically conductive portion and is placed in a meandering pattern between the battery cells (23),
whereas a straight section of the meandering pattern is placed between two successive battery cells (23) and whereas the bent section of the meandering pattern ensures an electrical contact with each of two specific collecting faces of the battery cells (23),
and **that** the temperature control device comprises at least one Peltier element (27, 28, 30) integrated in the straight section of the meandering pattern of the thin film (8), wherein the thin film (8) comprises at least one electrical circuit (29) to address the one or more Peltier elements (27, 28, 39).

12. Method according to claim 11,
further comprising forming at least one heat-channel (31) adapted to transport heat in at least a layer of the thin film (8).

## Patentansprüche

1. Elektrische Batterie (22) mit:
einer Vielzahl von Batteriezellen (23), die jeweils eine Anode (2) und eine Kathode (3) umfassen, wobei zwischen den Batteriezellen (23) eine Dünnschicht (8) angeordnet ist, die mindestens eine Temperatursteuerungsvorrichtung umfasst,
**dadurch gekennzeichnet, dass** die Dünnschicht (8)
eine Vielzahl von Anodenkontakten (12) aufweist, die geeignet sind, die Anoden (2) der Batteriezellen (23) elektrisch zu kontaktieren,
eine Vielzahl von Kathodenkontakten (13) aufweist, die dazu geeignet sind, die Kathoden (3) der Batteriezellen (23) elektrisch zu kontaktieren,
so ausgelegt ist, dass sie gleichzeitig einen elektrischen Kontakt zwischen den Anodenkontakten (12) und den Anoden (2) und zwischen den Kathodenkontakten (13) und den Kathoden (3) gewährleistet,
wobei der dünne Film (8) eine Vielzahl von Schichten (8a, 8b, 8c) umfasst, die mindestens eine erste Schicht (8a), die einen elektrisch leitenden Abschnitt umfasst, und eine zweite Schicht (8c), die einen elektrisch leitenden Abschnitt umfasst, umfasst und in einem mäanderförmigen Muster zwischen den Batteriezellen (23) angeordnet ist,
wobei ein gerader Abschnitt des mäandrierenden Musters zwischen zwei aufeinanderfolgenden Batteriezellen (23) angeordnet ist und wobei der gebogene Abschnitt des mäandrierenden Musters einen elektrischen Kontakt mit jeder von zwei spezifischen Sammelflächen der Batteriezellen (23) gewährleistet,
und dass die Temperatursteuervorrichtung mindestens ein Peltier-Element (27, 28, 30) umfasst, das in den geraden Abschnitt des mäanderförmigen Musters der dünnen Schicht (8) integriert ist, wobei die dünne Schicht (8) mindestens einen elektrischen Schaltkreis (29) umfasst, um das eine oder die mehreren Peltier-Elemente (27, 28, 39) anzusprechen.

2. Batterie nach Anspruch 1,
ferner **dadurch gekennzeichnet, dass** die Temperatursteuerungsvorrichtung eine Kühlvorrichtung (27, 28, 30) umfasst.

3. Batterie nach einem der Ansprüche 1 oder 2,
ferner **dadurch gekennzeichnet, dass** die Temperatursteuerungsvorrichtung eine aktive Kühlvorrichtung (27, 28, 30) umfasst.

4. Batterie nach einem der Ansprüche 1 bis 3,
**dadurch gekennzeichnet, dass** die Temperatursteuerungsvorrichtung eine Vielzahl von Kühl- und/oder Heizvorrichtungen (27, 28, 30) umfasst und dass mindestens zwei Kühl- und/oder Heizvorrichtungen unabhängig voneinander gesteuert werden können.

5. Batterie nach einem der Ansprüche 1 bis 4,
ferner **dadurch gekennzeichnet, dass** die Temperatursteuerungsvorrichtung mindestens ein Material umfasst, das eine endotherme Reaktion eingehen kann.

6. Batterie nach einem der Ansprüche 1 bis 5,
**dadurch gekennzeichnet, dass** die dünne Schicht (8) mindestens einen Wärmekanal (31) aufweist, der zum Transport von Wärme geeignet ist.

7. Batterie nach einem der Ansprüche 1 bis 6,
ferner **dadurch gekennzeichnet, dass** sie mindestens zwei Batteriezellen (23) umfasst und die Temperatursteuerungsvorrichtung so ausgelegt ist, dass sie Wärme von einer ersten Batteriezelle zu einer zweiten Batteriezelle transportiert.

8. Batterie nach einem der Ansprüche 1 bis 7, ferner **dadurch gekennzeichnet, dass**:
der Anodenkontakt (12) zur Bildung eines Anodenkollektors der Anode (2) ausgebildet ist,
und/oder
der Kathodenkontakt (13) so konfiguriert ist, dass er einen Kathodenkollektor der Kathode (3) bildet.

9. Batterie nach einem der Ansprüche 1 bis 8,
**dadurch gekennzeichnet, dass** sie nur eine Batteriezelle (23) zwischen zwei aufeinanderfolgenden Falten der dünnen Folie (8) aufweist.

10. Batterie nach einem der Ansprüche 1 bis 9,
ferner **dadurch gekennzeichnet, dass** die dünne Folie (8) eine integrierte Elektronik (11) umfasst, die sich von der Temperatursteuerungsvorrichtung unterscheidet.

11. Verfahren zur Herstellung einer Batterie (22), umfassend:
Erhalten einer Vielzahl von Batteriezellen (23), die jeweils eine Anode (2) und eine Kathode (3) umfassend:
Anbringen eines dünnen Films (8) mit mindestens einer Temperaturkontrollvorrichtung zwischen den Batteriezellen (23);
**dadurch gekennzeichnet**
**dass** die Dünnschicht (8) eine Vielzahl von Anodenkontakten (12) aufweist, die geeignet sind, die Anoden (2) der Batteriezellen (23) elektrisch zu kontaktieren,
eine Vielzahl von Kathodenkontakten (13) aufweist, die dazu geeignet sind, die Kathoden (3) der Batteriezellen (23) elektrisch zu kontaktieren, so ausgelegt ist, dass sie gleichzeitig einen elektrischen Kontakt zwischen den Anodenkontakten (12) und den Anoden (2) und zwischen den Kathodenkontakten (13) und den Kathoden (3) gewährleistet,
wobei der dünne Film (8) eine Vielzahl von Schichten (8a, 8b, 8c) umfasst, die mindestens eine erste Schicht (8a), die einen elektrisch leitenden Abschnitt umfasst, und eine zweite Schicht (8c), die einen elektrisch leitenden Abschnitt umfasst, umfasst und in einem mäanderförmigen Muster zwischen den Batteriezellen (23) angeordnet ist,
wobei ein gerader Abschnitt des mäandrierenden Musters zwischen zwei aufeinanderfolgenden Batteriezellen (23) angeordnet ist und wobei der gebogene Abschnitt des mäandrierenden Musters einen elektrischen Kontakt mit jeder von zwei spezifischen Sammelflächen der Batteriezellen (23) gewährleistet,
und **dass** die Temperatursteuervorrichtung mindestens ein Peltier-Element (27, 28, 30) umfasst, das in den geraden Abschnitt des mäanderförmigen Musters der dünnen Schicht (8) integriert ist, wobei die dünne Schicht (8) mindestens eine elektrische Schaltung (29) umfasst, um das eine oder die mehreren Peltier-Elemente (27, 28, 39) anzusprechen.

12. Verfahren nach Anspruch 11,
ferner umfassend das Ausbilden mindestens eines Wärmekanals (31), der geeignet ist, Wärme in mindestens einer Schicht des dünnen Films (8) zu transportieren.

## Revendications

1. Batterie électrique (22) comprenant :
une pluralité de cellules de batterie (23), chacune comprenant une anode (2) et une cathode (3), dans laquelle un film mince (8) comprenant au moins un dispositif de contrôle de la température est disposé entre les cellules de batterie (23),
**caractérisé en ce que** le film mince (8)
comprend une pluralité de contacts d'anode (12) adaptés pour contacter électriquement les anodes (2) des éléments de batterie (23),
comprend une pluralité de contacts de cathode (13) adaptés pour contacter électriquement les cathodes (3) des éléments de batterie (23),
est adapté pour assurer un contact électrique simultanément entre les contacts d'anode (12) et les anodes (2), et entre les contacts de cathode (13) et les cathodes (3),
dans lequel le film mince (8) comprend une pluralité de couches (8a, 8b, 8c) comprenant au moins une première couche (8a) comprenant une partie électriquement conductrice et une seconde couche (8c) comprenant une partie électriquement conductrice et est placé selon un motif en méandres entre les éléments de batterie (23),
tandis qu'une section droite du motif sinueux est placée entre deux éléments de batterie successifs (23) et que la section courbée du motif sinueux assure un contact électrique avec chacune de deux faces collectrices spécifiques des éléments de batterie (23),
et que le dispositif de contrôle de température comprend au moins un élément Peltier (27, 28, 30) intégré dans la section droite du motif sinueux du film mince (8), dans lequel le film mince (8) comprend au moins un circuit électrique (29) pour adresser le ou les éléments Peltier (27, 28, 39).

2. Batterie selon la revendication 1,
**caractérisée en outre en ce que** le dispositif de contrôle de la température comprend un dispositif de refroidissement (27, 28, 30).

3. Batterie selon l'une quelconque des revendications 1 ou 2,
**caractérisée en outre en ce que** le dispositif de contrôle de la température comprend un dispositif de refroidissement actif (27, 28, 30).

4. Batterie selon l'une quelconque des revendications 1 à 3,
**caractérisée en outre en ce que** le dispositif de contrôle de la température comprend une pluralité de dispositifs de refroidissement et/ou de chauffage (27, 28, 30), et **en ce qu'**au moins deux dispositifs de refroidissement et/ou de chauffage peuvent être contrôlés indépendamment les uns des autres.

5. Batterie selon l'une quelconque des revendications 1 à 4,
**caractérisée en outre en ce que** le dispositif de contrôle de la température comprend au moins un matériau qui peut subir une réaction endothermique.

6. Batterie selon l'une quelconque des revendications 1 à 5,
**caractérisée en outre en ce que** le film mince (8) comprend au moins un canal thermique (31) adapté pour transporter de la chaleur.

7. Batterie selon l'une quelconque des revendications 1 à 6,
**caractérisée en outre en ce qu'**elle comprend au moins deux éléments de batterie (23), et le dispositif de contrôle de la température est adapté pour transporter la chaleur d'un premier élément de batterie à un deuxième élément de batterie.

8. Batterie selon l'une quelconque des revendications 1 à 7, **caractérisée en outre en ce que** :
le contact anodique (12) est configuré pour former un collecteur anodique de l'anode (2),
et/ou
le contact cathodique (13) est configuré pour former un collecteur cathodique de la cathode (3).

9. Batterie selon l'une des revendications 1 à 8,
**caractérisée en outre en ce qu'**elle ne comprend qu'un seul élément de batterie (23) entre deux plis consécutifs du film mince (8).

10. Batterie selon l'une des revendications 1 à 9,
**caractérisée en outre en ce que** le film mince (8) comprend une électronique intégrée (11) différente du dispositif de contrôle de température.

11. Procédé de fabrication d'une batterie (22) comprenant :
l'obtention d'une pluralité de cellules de batterie (23), chacune comprenant une anode (2) et une cathode (3) ;
la mise en place d'un film mince (8) comprenant au moins un dispositif de contrôle de température entre les éléments de batterie (23) ;
**caractérisé en ce que**
que le film mince (8) comprend une pluralité de contacts d'anode (12) adaptés pour contacter électriquement les anodes (2) des éléments de batterie (23),
comprend une pluralité de contacts de cathode (13) adaptés pour contacter électriquement les cathodes (3) des éléments de batterie (23),
est adapté pour assurer un contact électrique simultanément entre les contacts d'anode (12) et les anodes (2), et entre les contacts de cathode (13) et les cathodes (3), dans lequel le film mince (8) comprend une pluralité de couches (8a, 8b, 8c) comprenant au moins une première couche (8a) comprenant une partie électriquement conductrice et une seconde couche (8c) comprenant une partie électriquement conductrice et est placé selon un motif en méandres entre les éléments de batterie (23),
tandis qu'une section droite du motif sinueux est placée entre deux éléments de batterie successifs (23) et que la section courbée du motif sinueux assure un contact électrique avec chacune de deux faces collectrices spécifiques des éléments de batterie (23),
et que le dispositif de contrôle de température comprend au moins un élément Peltier (27, 28, 30) intégré dans la section droite du motif sinueux du film mince (8), dans lequel le film mince (8) comprend au moins un circuit électrique (29) pour adresser le ou les éléments Peltier (27, 28, 39).

12. Procédé selon la revendication 11,
comprenant en outre la formation d'au moins un canal thermique (31) adapté pour transporter la chaleur dans au moins une couche du film mince (8).
